(19) Europäisches Patentamt
European Patent Office
Office européen des brevets

(11) **EP 4 481 973 A1**

(12) **EUROPEAN PATENT APPLICATION**

(43) Date of publication:
**25.12.2024 Bulletin 2024/52**

(21) Application number: **23181146.4**

(22) Date of filing: **23.06.2023**

(51) International Patent Classification (IPC):
$H02J\ 3/00$ $^{(2006.01)}$  $H02J\ 3/06$ $^{(2006.01)}$
$H02J\ 3/14$ $^{(2006.01)}$  $H02J\ 3/38$ $^{(2006.01)}$
$H02J\ 13/00$ $^{(2006.01)}$

(52) Cooperative Patent Classification (CPC):
**H02J 13/00004; H02J 3/008; H02J 3/06;
H02J 3/14; H02J 3/381;** H02J 2203/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **INESC TEC - Instituto de Engenharia
de
Sistemas e Computadores, Tecnologia e Ciência
4200-465 Porto (PT)**

(72) Inventors:
• **Soares, Tiago
4200-465 Porto (PT)**
• **Oliveira, Carlos
1200-465 Porto (PT)**
• **Simões, Micael
1200-465 Porto (PT)**
• **Matos, Manuel
4200-465 Porto (PT)**

(74) Representative: **Couto, Cláudia
Clarke, Modet Portugal
Av. Casal Ribeiro, 50 - 3º Dto.
1000-093 Lisboa (PT)**

(54) **SYSTEM AND METHOD FOR DISTRIBUTED OPERATION OF A LOCAL ENERGY COMMUNITY**

(57)     System and method for distributed operation of a local energy community. The system (100) comprises an ADMM coordinator (140) and an energy management system (136) at each community member (130) configured to:
define an initial optimization problem for each community member $i$ disregarding community presence;
solve each initial optimization problem, obtaining a first residual balancing variable ($init_{i,t}$);
obtain a second residual balancing variable ($cap_{i,j}$) representing the maximum current of power line (126) connecting community member $i$ with community member $j$; and
define an optimization problem to minimize energy exchanges with the main grid (110);
solve, in combination with the ADMM coordinator (140), the optimization problem in a distributed manner using an ADMM algorithm to obtain energy exchanges between the community members (130) and the main grid (110) for each time period $t$ of a set of time periods $T$; and
apply the plurality of energy exchanges for the corresponding community member $i$ (130) in each time period $t$.

FIG. 4

**Description**

**FIELD**

The present invention is comprised within the field of systems and method for operating a local energy community in a distributed manner.

**BACKGROUND**

In the last years, the number of prosumers (e.g. households equipped with loads that consume energy and photovoltaic systems that generate energy) in the distribution network is constantly rising. More and more frequently, the prosumers set up local energy communities (LECs) to collaborate with each other and exchange clean and locally-sourced energy between them and the electrical distribution grid. LECs provide participants with the freedom to share resources and work together towards shared objectives.

The growth of LECs has presented difficulties to the power system, particularly in terms of the rising prevalence of intermittent variable sources. As members of an electricity network, community participants are subject to strict technical limitations on energy exchange. Engaging in fully decentralized energy trading without any coordination can jeopardize the operation of the network within its technical boundaries. Consequently, energy trading models must account for the physical constraints of the network.

Community energy storage systems (CESSs) are collective assets that can be utilized by multiple community members and shared among them to effectively respond to fluctuations in renewable energy generation.

To optimize the use of available resources in a LEC, an energy management system (EMS) is implemented. The scheduling function of the EMS can be organized in either a centralized or distributed optimization framework. In the centralized approach, a single central node called the community manager coordinates the energy exchanges of all community members of the LEC. In contrast, the distributed approach allows each member of the LEC to have its own independent EMS, utilizing a decentralized optimization approach. The LEC problem can be broken down into N subproblems, where N represents the number of LEC members, and each member can solve their individual problem autonomously. Derivative-based methods are employed to solve decomposable optimization problems, and the ADMM (Alternating Direction Method of Multipliers) consensus algorithm is the most commonly used approach.

Oliveira et al. [1] applies the ADMM algorithm to a distributed network-constrained peer-to-peer (P2P) community-based energy trading system to minimize energy costs by minimizing energy exchanges with the main grid and maximizing peer-to-peer (P2P) energy exchanges between the community members, while preserving the privacy on data exchanges. The system disclosed in [1] for operating the LEC in a distributed way includes an ADMM coordinator and an EMS located at each community member. However, the method therein described requires too many ADMM iterations and, therefore, a great number of communications between the EMSs and the ADMM coordinator are required, which presents high demanding conditions on the communication network.

The present invention solves this problem using the ADMM algorithm with a pre-optimization stage so that far fewer communications between the EMSs and the ADMM coordinator are required.

References

[1] Oliveira, C et al.; Distributed Network-Constrained P2P Community-Based Market for Distribution Networks; Energies 2023, Volume 16, Issue 3, Article 1520

**SUMMARY**

The present invention relates to a system and method for distributed operation of a local energy community. The distributed approach uses the augmented Lagrangian relaxation with the alternating direction method of multipliers (ADMM), considering residual balancing, and the relaxed branch flow model to solve the optimization problem while increasing the ADMM algorithm convergence rate. The invention also considers network losses and resource sharing via collective assets.

The local energy community (LEC) includes a plurality of community members with a load and/or a photovoltaic system. The LEC also includes an electricity network comprising a set of buses and a set of power lines connecting the buses. The set of buses includes a main bus linked to a main grid and a first subset of buses linked to the community members. The electricity network is a radial distribution network in which every bus of the set of buses has one or more child buses and, except for the main bus, only one parent bus.

The system for distributed operation of a local energy community comprises an ADMM coordinator and an energy management system (EMS) arranged at each community member. The energy management system of each community member is configured to:

- Define, for the corresponding community member $i$, an initial optimization problem in which the community member $i$ can only engage in energy transactions with the main grid (the presence of the rest of community members is disregarded).

- Solve the initial optimization problem of the corresponding community member $i$, obtaining a first residual balancing variable ($init_{i,t}$) that provides a solution for every time interval $t$.

- Obtain, for the corresponding community member $i$, a second residual balancing variable for each child bus linked to a community member $j$, wherein each second residual balancing variable is the branch line capacity ($cap_{i,j}$) representing the maximum current that can flow in the power line connecting the bus linked to community member $i$ with a child bus linked to the community member $j$.

- Define, for the corresponding community member $i$, an optimization problem including an objective function subject to operational constraints of the electricity network using a branch flow model to minimize energy exchanges with the main grid and, at the same time, maximize peer-to-peer energy exchanges between the community members. The objective function for the corresponding community member i is similar to the one defined in [1] but modified with the first and second residual balancing variables.

- Solve, in combination with the ADMM coordinator and the energy management system of the rest of community members, the optimization problem in a distributed manner using the alternating direction method of multipliers, ADMM, to obtain a solution including a plurality of energy exchanges between the community members and the main grid for each time period $t$ of a set of time periods $T$.

- Apply the plurality of energy exchanges for the corresponding community member $i$ in each time period $t$.

The method for distributed operation of a local energy community comprises a pre-optimization stage including:

- Defining, for each community member $i$, an initial optimization problem in which the community member $i$ can only engage in energy transactions with the main grid.

- Solving the initial optimization problem of each community member $i$, obtaining a first residual balancing variable ($init_{i,t}$) that provides a solution for every time interval $t$.

- Obtaining, for each community member $i$, a second residual balancing variable for each child bus linked to a community member $j$, wherein each second residual balancing variable is the branch line capacity ($cap_{i,j}$) representing the maximum current that can flow in the power line connecting the bus linked to community member $i$ with a child bus linked to the community member $j$.

The method further comprises:

- Defining, for each community member $i$, an optimization problem including an objective function subject to operational constraints of the electricity network using a branch flow model to minimize energy exchanges with the main grid and maximize peer-to-peer energy exchanges between the community members. The objective function for each community member $i$ is similar to the one defined in [1] but modified with the first and second residual balancing variables.

- Solving the optimization problem in a distributed manner using the alternating direction method of multipliers, ADMM, obtaining a solution including a plurality of energy exchanges between the community members and the main grid for each time period $t$ of a set of time periods $T$.

- Applying the plurality of energy exchanges in each community member $i$ for each time period $t$.

The invention also refers to a computer program product comprising at least one computer-readable storage medium having recorded thereon computer code instructions that, when executed by a processor, causes the processor to perform the method for distributed operation of a local energy community.

The present invention greatly reduces the total number of ADMM iterations required for the ADMM algorithm to converge by applying a residual balancing technique, significantly reducing the number of communications and the data size transmitted between the ADMM coordinator and the community members. The invention achieves at least the following advantages:

- Resource utilization: Each iteration of the ADMM algorithm requires computational resources, such as processing power and memory. By minimizing the number of iterations, the algorithm consumes fewer resources, enabling more efficient utilization of computing infrastructure.

- Scalability: Reducing the number of iterations for convergence improves the algorithm's scalability, allowing it to handle larger problem sizes without sacrificing computational performance.

- Real-time decision-making: Timely decision-making is crucial. By minimizing the number of iterations, the ADMM algorithm can provide faster solutions, enabling participants to react and adapt their strategies more effectively in time-sensitive situations.

- Convergence robustness: ADMM algorithms rely on the convergence of iterations to find an optimal solution. However, the convergence process can be affected by factors such as data quality, model complexity, or the presence of constraints. By reducing the number of iterations required for convergence, the algorithm becomes more robust and less susceptible to convergence issues, ensuring reliable and consistent results.

In summary, reducing the number of iterations for the ADMM algorithm is essential for improving resource utilization, scalability, real-time decision-making, and convergence robustness. It enables faster and more effective optimization, benefiting community members and facilitating better decision-making processes with regard to energy exchanges.

## BRIEF DESCRIPTION OF THE DRAWINGS

A series of drawings which aid in better understanding the invention and which are expressly related with an embodiment of said invention, presented as a non-limiting example thereof, are very briefly described below.

Figure 1 is a schematic diagram showing a system for distributed operation of a local energy community.

Figure 2 shows an electric diagram of a local energy community with a 10-bus radial distribution network.

Figure 3 shows the data exchanged in each ADMM iteration between the ADMM coordinator and the community members.

Figure 4 is a flow diagram of a method for distributed operation of a local energy community according to an embodiment.

Figures 5A and 5B show an electric diagram of the pre-optimization stage applied to two different community members, disregarding the community presence.

Figure 6 depicts a schematic diagram of a local energy community including a community energy storage system.

Figure 7 depicts a table comparing results of the ADMM algorithm with and without residual balancing.

Figure 8 shows an electric diagram of a local energy community with a 33-bus radial distribution network.

Figure 9 shows an example of energy exchanged between the community members and the main grid for a time period.

## DETAILED DESCRIPTION

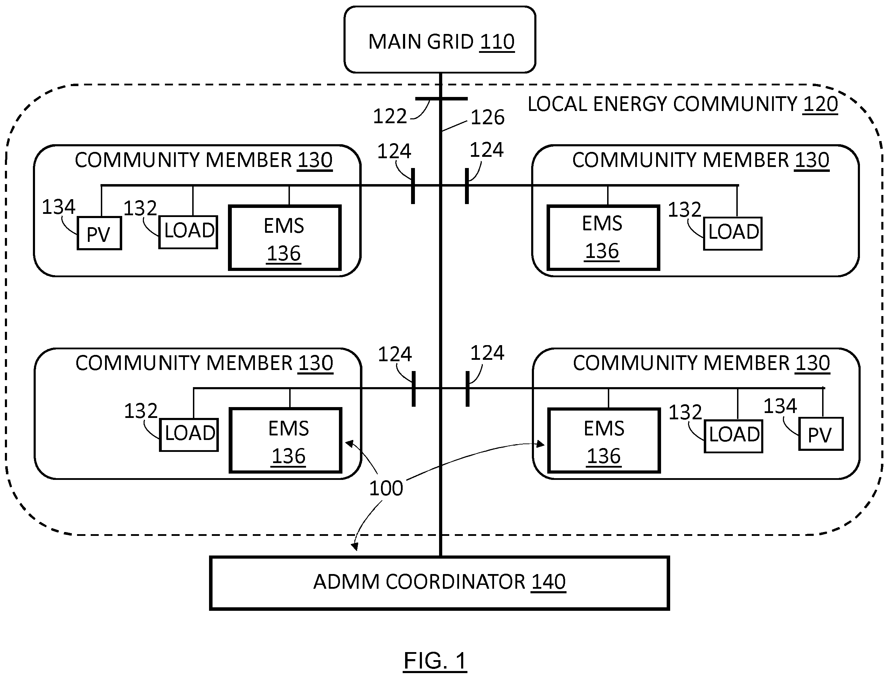

Figure 1 illustrates a schematic diagram of a local energy community 120 and a system for distributed operation thereof. The local energy community 120 includes an electricity network comprising a set of buses (122,124) and a set of power lines 126 connecting the buses, and a plurality of community members 130, each community member 130 comprising a load and/or a photovoltaic system. The set of buses includes a main bus 122 linked to a main grid 110 and a first subset of buses 124 linked to the community members 130 comprising a load 132 and/or a photovoltaic system 134. The load 132 includes one or more community member's assets (e.g. electrical appliances) that consume energy, and the photovoltaic system 134 includes one or more photovoltaic panels for renewable energy generation.

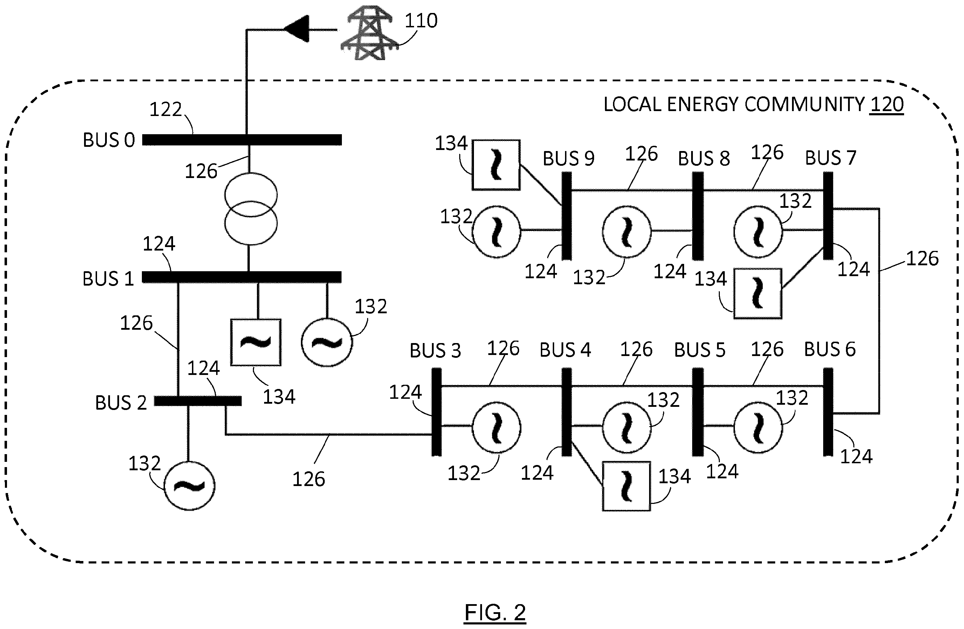

The electricity network is a radial distribution network. **Figure 2** shows an example of a local energy community 120 with a radial distribution network (also depicted in [1]), in which every bus of the set of buses has one or more child buses and only one parent bus, except for the main bus 122 (BUS 0, serving as the reference bus and linking to the external supplier for energy import or export) which has one or more child buses but no parent bus (t is directly connected to the main grid 110). Each pair of buses of the set of buses (122,124) are connected by a power line 126.

In the example of Figure 2 the first subset of buses 124 comprises BUS 1 to BUS 9 connected in cascade, each bus having one child bus and one parent bus. For instance, BUS 3 is the child bus of BUS 2, and BUS 1 is the parent bus of BUS 2. Each community member 130 (which includes a load 132 and, optionally, a photovoltaic system 134 for energy generation), is connected to a corresponding bus of the first subset of buses 124.

Back to Figure 1, the system 100 for operating the local energy community 120 in a distributed way comprises an ADMM coordinator 140 and an energy management system (EMS) 136 located at each community member 130 (these elements are highlighted in Figure 1).

The energy management system 136 of each community member 130 is configured to, in combination with the ADMM coordinator 140, apply the ADMM (Alternating Direction Method of Multipliers) algorithm according to the prior art (as described in [1], which is included herein by reference in its entirety). In particular, each energy management system 136 is configured to:

-    Define, for the corresponding community member 130 $i$, an optimization problem including an objective function subject to operational constraints of the electricity network using a branch flow model to minimize energy exchanges with the main grid 110 and maximize peer-to-peer energy exchanges between the community members 130. The branch flow model is used to model the network constraints in radial distribution networks.

-    Solve, in combination with the ADMM coordinator 140 and the energy management system 136 of the rest of community members 130, the optimization problem in a distributed manner using the ADMM algorithm, to obtain a solution including a plurality of energy exchanges between the community members 130 and the main grid 110 for each time period $t$ of a set of time periods $T$.

-    Apply the plurality of energy exchanges for the corresponding community member 130 $i$ in each time period $t$.

The solution of the optimization problem for a community member 130 using the ADMM algorithm achieves an improved community energy efficiency by lowering the external dependency on an external supplier, minimizing energy exchanges with the main grid, including imports from the main grid 110 and exports to the main grid 110, and maximizing internal trades with other community members. Internal trades refer to the energy that a community member trades with another community member, and imports/exports from/to the main grid 110 is the energy imported/exported from/to a community member 130, and therefore, from/to the local energy community 120. The solution of the optimization problem also includes other variables related to the electricity network, in particular:

-    Bus voltages: each community member 130 establishes a proper voltage at its bus 124.

-    Power line current: each community member 130 makes sure that the capacity of the power lines 126 connecting its bus 124 with the child buses and the parent node are not overloaded.

-    Power flow: each community member 130 knows the power flow of the power lines 126 that connect its bus 124 with the child buses and the parent node.

Overall, each community member 130 by solving its own optimization problem knows the results of the power flows and current for its lines, the voltage at its bus, the power imports/exports and the community internal trades.

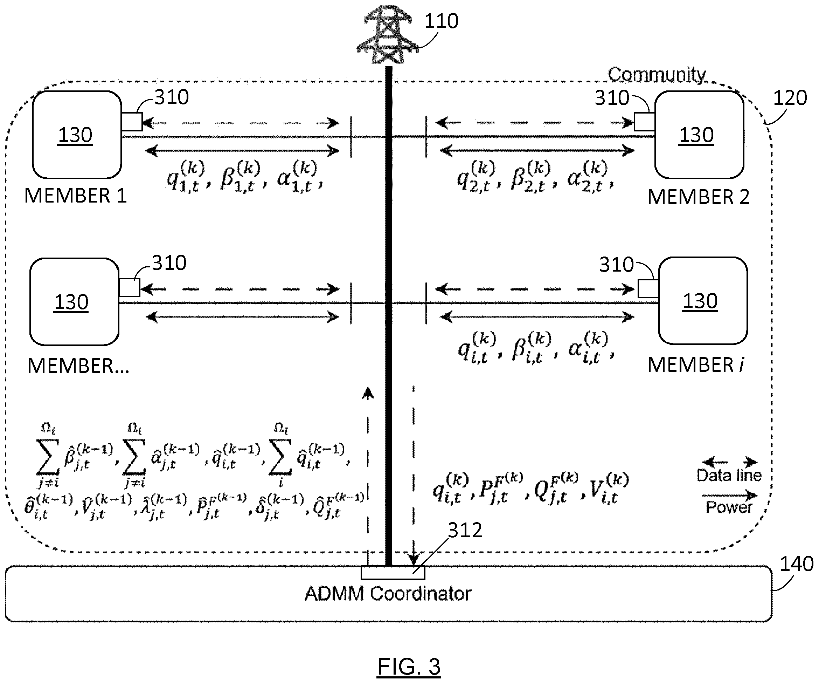

However, applying the ADMM algorithm as described in [1] has several drawbacks. **Figure 3** shows the data exchanged in each ADMM iteration between the ADMM coordinator 140 and the community members 130. The energy management systems 136 and ADMM coordinator 140 include a communication module (310,312) to exchange data. Any known technology, wired or wireless, can be used to exchange data; for instance, the energy management systems 136 and ADMM coordinator 140 can communicate through the Internet using a Wi-Fi module connected to a respective router that provides access to the Internet. The ADMM coordinator 140 sends to each community member the variables they need for the next iteration. In an embodiment, the ADMM coordinator 140 sends in iteration $k$-$1$ the following data to each community member $i$:

$$\sum_{j\neq i}^{\Omega_i} \hat{\beta}_{j,t}^{(k-1)}, \ \sum_{j\neq i}^{\Omega_i} \hat{\alpha}_{j,t}^{(k-1)}, \ \hat{q}_{i,t}^{(k-1)}, \ \sum_{i}^{\Omega_i} \hat{q}_{i,t}^{(k-1)}, \ \hat{\theta}_{i,t}^{(k-1)}, \ \hat{\lambda}_{j,t}^{(k-1)}, \ \hat{\delta}_{j,t}^{(k-1)}, \ \hat{V}_{j,t}^{(k-1)}, \ \hat{P}_{j,t}^{F(k-1)},$$

$$\hat{Q}_{j,t}^{F(k-1)}$$

wherein:

$\Omega_i$ is the set of peers $n$ (including community members 130 and, when present, CESSs);

$\beta_{i,t}$ is a variable representing the electricity exported for the main grid 110 by community member $i$ in period $t$ through the local energy community 120;

$\alpha_{ai,t}$ is a variable representing the electricity imported from the main grid 110 by community member $i$ in period $t$ through the local energy community 120;

$q_{i,t}$ is a variable representing the internal trade in the local energy community 120 by community member $i$ in period $t$;

$\theta_{i,t}$ is a ADMM dual variable associated to the internal trades balance constraint;

$\lambda_{j,t}$ is a ADMM dual variable associated to the active power flow balance constraint of community member $j$ linked to a child bus of community member $i$;

$\delta_{j,t}$ is a ADMM dual variable associated to the reactive power flow balance constraint of community member $j$ linked to a child bus of community member $i$ ;

$V_{j,t}$ is the squared voltage magnitude at the bus of community member $j$ (linked to a child bus of community member $i$) in period $t$;

$P_{j,t}^{F}$ (or $P_{i,j,t}^{F}$) is the active power injected in line $i$ - $j$ (the line connecting the bus of community member $i$ with its child bus linked to community member $j$) in period t;

$Q_{j,t}^{F}$ (or $Q_{i,j,t}^{F}$) is the reactive power injected in line $i$ - $j$ (the line connecting the bus of community member $i$ with its child bus linked to community member $j$) in period $t$.

In the next iteration $k$, once each community member $i$ has solved the corresponding optimization problem, each community member $i$ obtains a set of variables including a plurality of variables that requires to be updated and sends them to the ADMM coordinator 140, the plurality of variables including the internal trade variable $q_{i,t}^{(k)}$, the active power flow variable $P_{j,t}^{F(k)}$, the reactive power flow variable $Q_{j,t}^{F(k)}$ and the bus voltage variable $V_{i,t}^{(k)}$ (the squared voltage magnitude at the bus of community member $i$ in period $t$).

The size of data exchanged between the energy management system 136 of the community members 130 and the ADMM coordinator 140 is high, this size being proportional to the total number $K_T$ of ADMM iterations required to reach convergence.

Advantageously, the present invention significantly reduces the total number of ADMM iterations required for the ADMM algorithm to converge by applying a residual balancing technique, thus reducing the number of communications and the data size transmitted between the ADMM coordinator 140 and the community members 130. In addition, the computational time is also greatly reduced. To achieve this effect, the energy management system 136 of each community member $i$ is configured to:

- Define, for the corresponding community member $i$, an initial optimization problem in which the community member $i$ can only engage in energy transactions with the main grid 110 (only one community member is considered besides the main grid 110, other community members are not considered and therefore there are no internal energy exchanges between community members).

- Solve the initial optimization problem of the corresponding community member i, obtaining a first residual balancing variable ($init_{i,t}$) that provides a solution for every time interval $t$. This variable is a parameter of the ADMM algorithm, which means it is passed as known data from a previous solution.

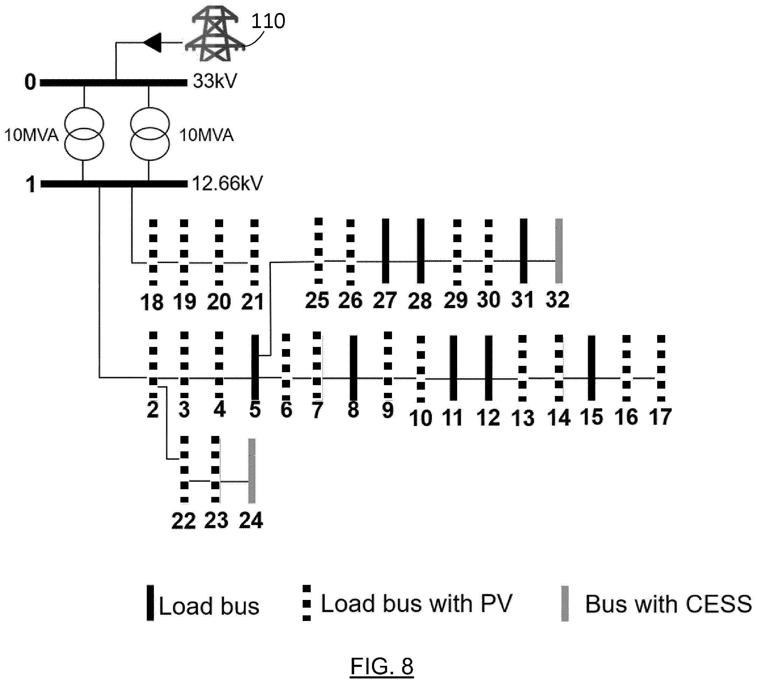

- Obtain, for the corresponding community member $i$, a second residual balancing variable for each child bus linked to a community member $j$, wherein each second residual balancing variable is the branch line capacity ($cap_{i,j}$) defined according to the radial distribution line properties, representing the maximum current that can flow in the power line 126 connecting the bus linked to community member i with a child bus linked to the community member $j$ (i.e. the maximum current that can flow on the power line 126 that connects community member i to community member $j$). The branch line capacity ($cap_{i,j}$) is a given parameter gathered from the radial distribution network data. For instance, in the example of Figure 2 BUS 2 has one child bus (BUS 3), and the second residual balancing variable is the branch line capacity ($cap_{2,3}$) of the line connecting community member 2 (the one linked to BUS 2) to community member 3 (the one linked to BUS 3). In the example of Figure 8 (which will be later discussed), BUS 2 has two child buses (BUS 3 and BUS 22, respectively linked to community members 3 and 22), and the residual balancing variables are the branch line capacity ($cap_{2,3}$) of the line connecting BUS 2 - BUS 3 and the branch line capacity ($cap_{2,22}$) of the line connecting BUS 2 - BUS 22.

- Modify, prior to solving the optimization problem, the objective function for the corresponding community member i with the first and second residual balancing variables.

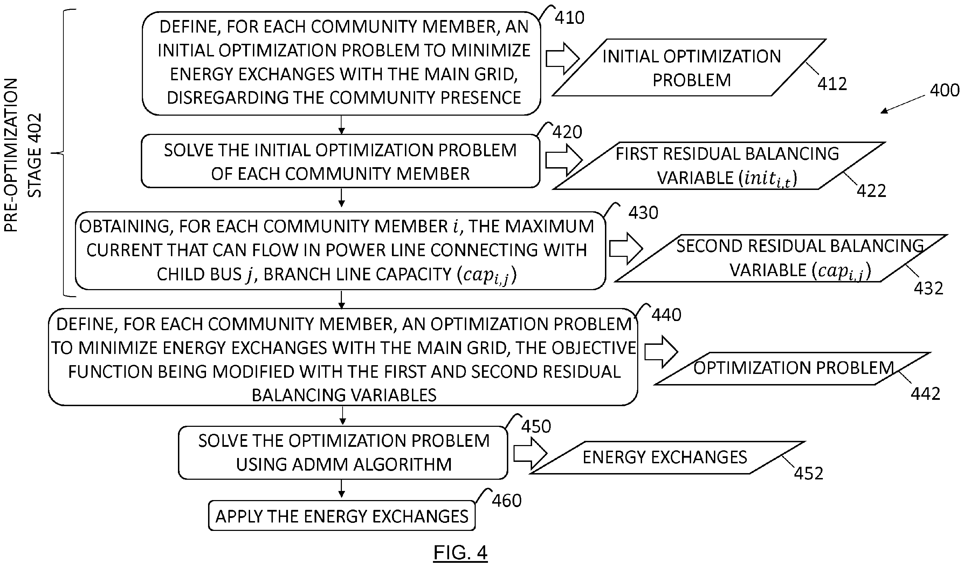

**Figure 4** is a flow diagram of a method 400 for distributed operation of a local energy community 120 according to the present disclosure. The method 400, which is implemented by the energy management systems 136 and the ADMM coordinator 140, comprises:

- A pre-optimization stage 402 including:

  • Defining 410, for each community member $i$, an initial optimization problem 412 to minimize energy exchanges with the main grid 110. The initial optimization problem 412 is similar to the optimization problem described in [1], but disregarding the rest of community members, considering that the community member $i$ can only engage in energy transactions with the main grid 110. Therefore, there are no internal trades between community members 130.

  • Solving 420 the initial optimization problem 412 of each community member $i$, obtaining a first residual balancing variable ($init_{i,t}$) 422 that provides a solution for every time interval $t$. The initial optimization problem 412 is solved individually by each community member $i$. There is no central entity coordinating the problem. Each community member $i$ solves its own individual problem, wherein the local energy community 120 does not exist (community presence is disregarded) for the entire time interval $t$. The solution is stored in variable $init_{i,t}$ for community member $i$ and for each time interval $t$.

  • Obtaining 430, for each community member $i$, a second residual balancing variable 432 for each child bus linked to community member $j$, wherein each second residual balancing variable is the branch line capacity ($cap_{i,j}$) representing the maximum current that can flow in the power line 126 connecting the bus linked to community member $i$ with a child bus linked to community member $j$

- Defining 440, for each community member $i$, an optimization problem 442 including an objective function subject to operational constraints of the electricity network using a branch flow model to minimize energy exchanges with the main grid 110 and maximize peer-to-peer energy exchanges between the community members 130. The optimization problem 442 for each community member $i$ corresponds to the one defined in [1], but wherein the objective function is modified with the first 422 and second 432 residual balancing variables to significantly reduce the total number of ADMM iterations performed in [1].

- Solving 450 the optimization problem 442 in a distributed manner using the alternating direction method of multipliers, ADMM, obtaining a solution including a plurality of energy exchanges 452 between the community members 130 and the main grid 110 for each time period $t$ of a set of time periods $T$. The ADMM algorithm is applied as described in [1].

- Applying 460 the plurality of energy exchanges in each community member i (130) for each time period $t$.

The distributed network-constrained peer-to-peer (P2P) community-based energy trading system is the integration of an optimal power flow (OPF) problem with the P2P community-based energy trading system in a single distributed approach. Hence, the present invention proposes a fully decentralized algorithm that maximizes P2P exchanges and minimizes grid imports for all community members, individually and in parallel accounting for network constraints.

In [1], the distributed energy trading system is formulated under the ADMM approach through the formulation of individual subproblems for every community member $i$ from the centralized community-based energy trading problem. In a radial distribution network $N := (N^E, L^E)$, $N^E$ refers to the set of buses (122,124) of the electricity network and $L^E$ refers to the set of lines 126 of the electricity network. In this network, every bus, except the main bus 122, has one parent bus and a set of child buses represented by $C_i$. Each line 126 originates from a bus linked to community member $i$ and points towards its parent bus.

When solving 450 the optimization problem 442, at each ADMM iteration the ADMM coordinator 140 checks for convergence through the balance of the coupling variables and updates the dual variables ($\theta_{i,t}$, $\lambda_{i,t}$, $\delta_{i,t}$) for the following iteration with the penalty parameter $\rho$. Consensus is reached when the relevant local copy for each subproblem matches with the global coupling variable. The local copy of the coupling variables passed for each subproblem is considered a parameter of the optimization problem 442 solved by community member $i$ at the current ADMM iteration ($k$), denoted by a hat. In equation (1) is the energy trading clearing subproblem for each community member $i$, and in equations (2)-(7) are presented the constraints of the decomposed model.

$$\text{Min} \sum_t^T \left( \begin{array}{c} \dfrac{\pi_{i,t} \cdot \left( P_{i,t}^{g\,(k)} - P_{i,t}^{l\,(k)} \right) - \pi_{i,t}^S \cdot \left( \beta_{i,t}^{(k)} + \sum_{j \neq i}^{\Omega_i} \widehat{\beta}_{j,t}^{(k-1)} \right) + \pi_{i,t}^B \cdot \left( \alpha_{i,t}^{(k)} + \sum_{j \neq i}^{\Omega_i} \widehat{\alpha}_{j,t}^{(k-1)} \right)}{init_{i,t}} + \\[2ex] \widehat{\theta}_{i,t}^{(k-1)} \cdot q_{i,t}^{(k)} + \dfrac{\rho}{2} \cdot \left\| \widehat{q}_{i,t}^{(k-1)} - \dfrac{1}{\Omega_i} \cdot \sum_i^{\Omega_i} \widehat{q}_{i,t}^{(k-1)} \right\|^2 + \\[2ex] \sum_{j \in C_i} \widehat{\lambda}_{j,t}^{(k-1)} \cdot \left( \dfrac{P_{j,t}^{F\,(k)} - \widehat{P}_{j,t}^{F\,(k-1)}}{cap_{i,j}} \right) + \dfrac{\rho}{2} \cdot \left\| \dfrac{P_{j,t}^{F\,(k)} - \widehat{P}_{j,t}^{F\,(k-1)}}{cap_{i,j}} \right\|^2 + \\[2ex] \sum_{j \in C_i} \widehat{\delta}_{j,t}^{(k-1)} \cdot \left( \dfrac{Q_{j,t}^{F\,(k)} - \widehat{Q}_{j,t}^{F\,(k-1)}}{cap_{i,j}} \right) + \dfrac{\rho}{2} \cdot \left\| \dfrac{Q_{j,t}^{F\,(k)} - \widehat{Q}_{j,t}^{F\,(k-1)}}{cap_{i,j}} \right\|^2 \end{array} \right) , \forall i \in \Omega_i \quad (1)$$

$$P_{i,t}^{g\,(k)} - P_{i,t}^{l\,(k)} = q_{i,t}^{(k)} + \beta_{i,t}^{(k)} - \alpha_{i,t}^{(k)} + \sum_n^{\Omega_{CA}} S_{i,n,t}^{ch} - S_{i,n,t}^{dch} , \; \forall (i,t) \in (\Omega_i \setminus \{0, \Omega_{CA}\}, T)$$

$$(2)$$

$$P_{i,t}^{g\,(k)} - P_{i,t}^{l\,(k)} = \sum_{j \in C_i} P_{j,t}^{F\,(k)} , \forall (i,t) \in (N^E \setminus \Omega_{CA}, T) \tag{3}$$

$$Q_{i,t}^{g\,(k)} - Q_{i,t}^{l\,(k)} = \sum_{j \in C_i} Q_{j,t}^{F\,(k)} , \forall (i,t) \in (N^E, T) \tag{4}$$

$$V_{i,t}^{(k)} - \widehat{V}_{j,t}^{(k-1)} = 2 \cdot \left( R_{i,j} \cdot P_{j,t}^{F\,(k)} + X_{i,j} \cdot Q_{j,t}^{F\,(k)} \right) , \forall (i,t) \in (N^E, T) \tag{5}$$

$$\alpha_{i,t}, \beta_{i,t} \geq 0 , q_{i,t} \in \mathbb{R} , \forall (i,t) \in (\Omega_i \setminus \Omega_{CA}, T) \tag{6}$$

$$\underline{V_{i,t}} \leq V_{i,t} \leq \overline{V_{i,t}} , 0 \leq I_{i,j,t} \leq \overline{I_{i,j,t}} , \forall (i,j,t) \in (N^E, N^E, T) \tag{7}$$

For each community member $i$, the power generated $P_{i,t}^g$ and the power consumed $P_{i,t}^l$ within a time interval $t$ are determined, assuming a 20% flexibility in demand. The objective function of the optimization problem 442 is modeled by equation (1), where $\pi_{i,t}$ is the price of the energy that community member $i$ is willing to pay/receive in period t, $\alpha_{i,t}$ represents the imported energy priced by community member $i$'s retailer, $\pi_{i,t}^B$, $q_{i,t}$ represents P2P trades from community member $i$ to the local energy community 120, and $\beta_{i,t}$ represents the energy exported, priced according to the feed-in price in period $t$, $\pi_{i,t}^S$. The active power balance for each community member $i$ during time set $T$ is constrained by equation (2). The terms $S_{i,n,t}^{ch}$ and $S_{i,n,t}^{dch}$ are respectively the power charged and discharged to the storage unit $n$ by community member $i$ in time $t$; these terms are only used when the local energy community 120 includes resource sharing through the integration of collective assets in the community, such as collective energy storage systems (CESS), which are optional and will be later explained when describing another embodiment. $V_{i,t}$ the squared voltage magnitude at the bus of community member $i$ in period $t$; $l_{i,j,t}$ is the squared current magnitude at line $i$ - $j$ in period t; $l_{i,j,t}$ is the branch line capacity of line $i$ - $j$ in period $t$; $\underline{V_{i,t}}$ and $\overline{V_{i,t}}$ are respectively the lower and upper limits of node voltage $i$ in period $t$. $C_i$ is the set of child buses of the parent bus linked to community member $i$. $R_{i,j}$ and $X_{i,j}$ are respectively the resistance and reactance of line $i$ - $j$ in period t.

Constraints in equations (3) and (4) define the equations for active and reactive power flow, respectively, while constraint in equation (5) accounts for voltage drop along a power line 126. Constraints in equations (6) and (7) establish the variables' domain. Implementing such models requires information and communication technology (ICT) systems and platform support to enable communication between system agents, such as the communication modules (310,312) used to exchange data between the community members 130 and the ADMM coordinator 140. Platforms proposed in [1] can be utilized to support the proposed models.

In this type of distributed structure depicted in Figure 1, each community member 130 is responsible for its energy exchanges, either within or outside the local energy community 120. Each community member 130 is solely responsible for updating the ADMM coordinator 140 of the energy exchanges it intends to carry out after solving its own optimization problem 442. This distributed structure improves simplicity with less sharing of information by its participants, removing the need of a community manager used in the centralized approach.

The present invention uses a residual balancing technique, corresponding to the pre-optimization stage 402 described in Figure 4, that enhances the convergence speed of the ADMM algorithm towards the optimal solution while maintaining its accuracy. To achieve this, it commences by computing the optimal solution for each community member 130 independently, disregarding the community presence. This leads to obtaining a set of optimal solutions for each community member 130 and time interval, $init_{i,t}$, that corresponds to the worst possible scenario in the community. In the distributed optimization process, the ADMM technique is applied, and the primal objective function, which encompasses energy transaction costs represented by the first three terms in equation (1), is divided by this pre-solution value (first residual balancing variable $init_{i,t}$).

Likewise, to ensure consistency, the consensus terms (i.e. the active and reactive power flow consensus terms) are normalized by dividing them by the branch line capacity $cap_{i,j}$, and therefore ranging between 0 and 1. The active $P_{j,t}^F$ and reactive $Q_{j,t}^F$ power flow variables in equation (1) are the consensus variables, each consensus variable being a local copy variable of the global coupling variable. The consensus terms in equation (1) of the objective function are represented by the local variables (e.g. $P_{j,t}^{F(k)}$) and the global coupling variables (e.g. $\hat{P}_{j,t}^{F(k-1)}$); for instance, the active power flow $P_{j,t}^F$ is a coupling variable, in each iteration $k$ that variable is copied and in the consensus term the local copy variable is subtracted by the global coupling variable $\hat{P}_{j,t}^{F(k-1)}$ (which comes from the previous iteration $k$ - 1, already known). The normalization is exemplified in the following equations for the active power flow consensus and the reactive power flow consensus, wherein both the dual variables and the penalty terms are divided by the second residual balancing variable $cap_{i,j}$:

$$\sum_{j \in C_i} \hat{\lambda}_{j,t}^{(k-1)} \cdot \left( \frac{P_{j,t}^{F(k)} - \hat{P}_{j,t}^{F(k-1)}}{cap_{i,j}} \right) + \frac{\rho}{2} \cdot \left\| \frac{P_{j,t}^{F(k)} - \hat{P}_{j,t}^{F(k-1)}}{cap_{i,j}} \right\|^2$$

$$\sum_{j \in C_i} \hat{\delta}_{j,t}^{(k-1)} \cdot \left( \frac{Q_{j,t}^{F(k)} - \hat{Q}_{j,t}^{F(k-1)}}{cap_{i,j}} \right) + \frac{\rho}{2} \cdot \left\| \frac{Q_{j,t}^{F(k)} - \hat{Q}_{j,t}^{F(k-1)}}{cap_{i,j}} \right\|^2$$

By balancing the residuals and applying these normalization techniques, the ADMM algorithm converges faster toward the optimal solution, ensuring both efficiency and accuracy in the solution of the optimization problem.

The most significant changes in the initial optimization problem 412 of the pre-optimization stage 402, when compared to the optimization problem 442 on the ADMM algorithm, are on equation (1) of the objective function, where there is no community presence or ADMM consensus term, and on equation (2), where there are no internal trades consideration through the variable $q_{i,t}$. In an embodiment, the equations (1')-(7') of the initial optimization problem 412 that disregard community presence are as follows:

$$\min \Sigma_t^T \left( \pi_{i,t} \cdot \left( P_{i,t}^{g^{(k)}} - P_{i,t}^{l^{(k)}} \right) - \pi_{i,t}^S \cdot \left( \beta_{i,t}^{(k)} + \Sigma_{j\neq i}^{\Omega_i} \hat{\beta}_{j,t}^{(k-1)} \right) + \pi_{i,t}^B \cdot \left( \alpha_{i,t}^{(k)} + \right. \right.$$

$$\left. \left. \Sigma_{j\neq i}^{\Omega_i} \hat{\alpha}_{j,t}^{(k-1)} \right) \right) , \forall i \in \Omega_i \tag{1'}$$

$$P_{i,t}^{g^{(k)}} - P_{i,t}^{l^{(k)}} = \beta_{i,t}^{(k)} - \alpha_{i,t}^{(k)}, \forall (i,t) \in (\Omega_i \setminus \{0, \Omega_{\mathrm{CA}}\}, T) \tag{2'}$$

$$P_{i,t}^{g^{(k)}} - P_{i,t}^{l^{(k)}} = \Sigma_{j\in C_i} P_{j,t}^{F^{(k)}}, \forall (i,t) \in (N^E \setminus \Omega_{\mathrm{CA}}, T) \tag{3'}$$

$$Q_{i,t}^{g^{(k)}} - Q_{i,t}^{l^{(k)}} = \Sigma_{j\in C_i} Q_{j,t}^{F^{(k)}}, \forall (i,t) \in (N^E, T) \tag{4'}$$

$$V_{i,t}^{(k)} - \hat{V}_{j,t}^{(k-1)} = 2 \cdot \left( R_{i,j} \cdot P_{j,t}^{F^{(k)}} + X_{i,j} \cdot Q_{j,t}^{F^{(k)}} \right), \forall (i,t) \in (N^E, T) \tag{5'}$$

$$\alpha_{i,t}, \beta_{i,t} \geq 0, q_{i,t} \in \mathbb{R}, \forall (i,t) \in (\Omega_i \setminus \Omega_{\mathrm{CA}}, T) \tag{6'}$$

$$\underline{V_{i,t}} \leq V_{i,t} \leq \overline{V_{i,t}}, 0 \leq I_{i,j,t} \leq \overline{I_{i,j,t}}, \forall (i,j,t) \in (N^E, N^E, T) \tag{7'}$$

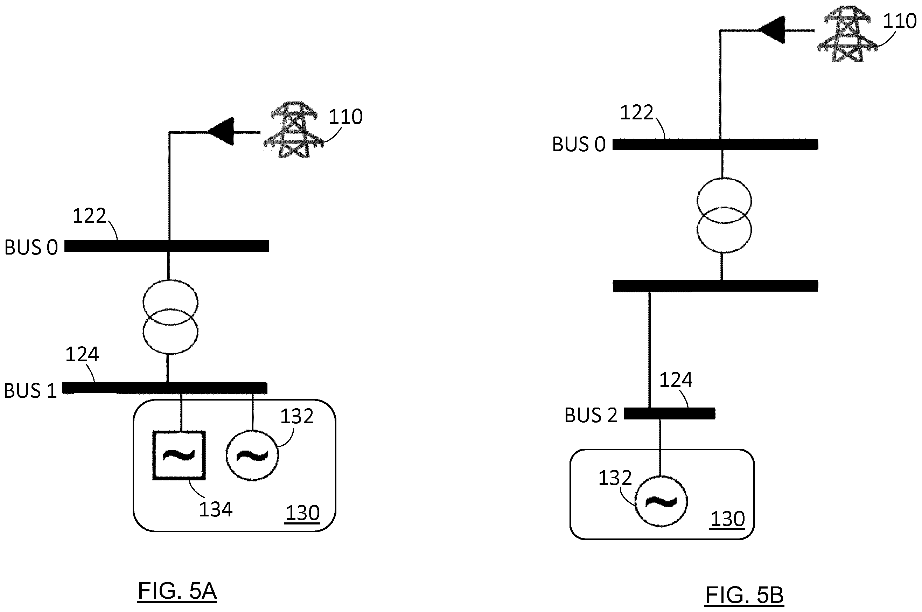

**Figure 5A** and **5B** show an electric diagram of the pre-optimization stage 402 applied to the local energy community 120 of Figure 2 for two different community members 130, the community member 130 linked to BUS 1 (Figure 5A) and the community member 130 linked to BUS 2 (Figure 5B). In the initial optimization problem 412 of the pre-optimization stage 402, only one community member 130 is considered besides the main grid 110 linked to BUS 0. This way, 9 initial optimization problems 412 (one for each community member) are built, and the solutions gathered and saved in the first residual balancing variable $init_{i,t}$ (e.g., $init_{1,t}$ is a scalar that represents the community member 1 costs for each time interval). When this parameter is used in the ADMM algorithm (dividing the three terms of the objective function by $init_{i,t}$), the solution is normalized, the summation of these three terms is kept between 0 and 1, since $init_{i,t}$ is the worst possible scenario.

To attain the global optimum, the subproblem's solutions must align through the replicated local coupling variables. During each ADMM iteration, the ADMM coordinator 140 ensures convergence by examining the balance of the coupling variables and adjusts the dual variables ($\theta_{i,t}, \lambda_{i,t}, \delta_{i,t}$) for the subsequent iteration using the penalty parameter $\rho$. Consensus is achieved when the corresponding local copy for each subproblem coincides with the global coupling variable. At the current iteration $k$, community member $i$'s optimization problem considers the local copy of the coupling variables passed for each subproblem as a parameter.

The ADMM algorithm will iterate and the dual variables ($\theta_{i,t}, \lambda_{i,t}, \delta_{i,t}$) are updated at each iteration. The updates of the dual variables ($\theta_{i,t}, \lambda_{i,t}, \delta_{i,t}$) are shown in equations (8)-(10). Equation (11) is the squared voltage update, which is needed regarding the voltage drop in constraint of equation (5). By updating the dual variables ($\theta_{i,t}, \lambda_{i,t}, \delta_{i,t}$) at each iteration, the optimization problem is solved in a distributed manner while ensuring optimal results.

$$\theta_{i,t}^{(k)} = \theta_{i,t}^{(k-1)} + \rho \cdot \left( \frac{1}{\Omega_{i,t}} \cdot \Sigma_i^{\Omega_i} \hat{q}_{i,t}^{(k)} \right) \tag{8}$$

$$\lambda_{i,j,t}^{(k)} = \lambda_{i,j,t}^{(k-1)} + \rho \cdot \left( P_{i,j,t}^{F^{(k)}} - \hat{P}_{i,j,t}^{F^{(k-1)}} \right) \tag{9}$$

$$\delta_{i,j,t}^{(k)} = \delta_{i,j,t}^{(k-1)} + \rho \cdot \left( Q_{i,j,t}^{F(k)} - \hat{Q}_{i,j,t}^{F(k-1)} \right) \qquad (10)$$

$$\hat{V}_{i,t}^{(k)} = V_{i,t}^{(k-1)} \qquad (11)$$

The ADMM algorithm will continue to iterate either until convergence is achieved or until the maximum number of iterations is reached. The convergence conditions are given by equations (12) and (13) with a maximum error of $\varepsilon^p$ or $\varepsilon^d$. $\varepsilon^p$ and $\varepsilon^d$ are the admissible tolerance for the primal and dual residuals, set as $10^{-4}$. The maximum number of iterations given to the ADMM algorithm may be set, for example, to 10000.

$$\sum_t^T \sum_i^{\Omega_i} \frac{\left( \pi_{i,t} \cdot P_{i,t}^{l(k)} - \pi_{i,t}^S \cdot \beta_{i,t}^{(k)} + \pi_{i,t}^B \cdot \alpha_{i,t}^{(k)} \right) - }{\left( \pi_{i,t} \cdot P_{i,t}^{l(k-1)} - \pi_{i,t}^S \cdot \beta_{i,t}^{(k-1)} + \pi_{i,t}^B \cdot \alpha_{i,t}^{(k-1)} \right)} \leq \epsilon^p \qquad (12)$$

$$\sum_t^T \sum_i^{\Omega_i} \sum_j^{\Omega_i} \left( \left( P_{i,j,t}^{F(k)} + P_{j,i,t}^{F(k)} \right)^2 + \left( Q_{i,j,t}^{F(k)} - Q_{j,i,t}^{F(k)} \right)^2 + \left( \sum_i^{\Omega_i} q_{i,t} \right)^2 \right) \leq \epsilon^d \cdot \sqrt{(2 \cdot}$$

$$(3 \cdot T \cdot \Omega_i)) \qquad (13)$$

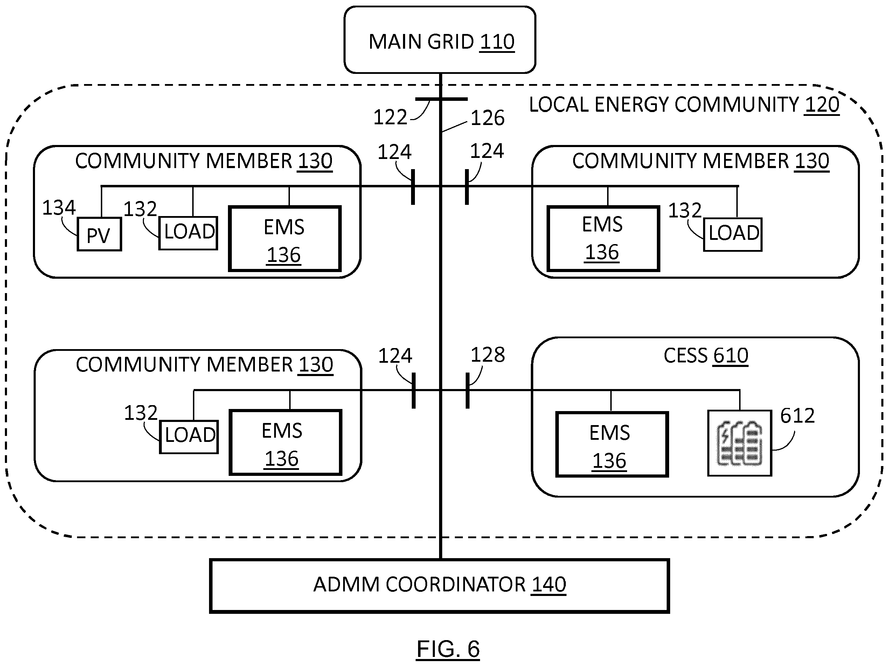

The system 100 and method 400 of the present disclosure may also be applied for distributed operation of a local energy community 120 wherein the set of buses of the electricity network further includes a second subset of buses 128, each bus 128 of the second subset of buses linked to collective energy storage system (CESS). **Figure 6** depicts a schematic diagram of a local energy community 120 including a community energy storage system, CESS 610 (the local energy community 120 may include one or more CESS 610). In this case, the objective function of the optimization problem 442 is subject to operational constraints of the electricity network including constraints of the charging and discharging of each collective energy storage system 610. Each CESS 610 includes an EMS 136 and one or more energy storage devices 612.

For the CESS 610, constraints in equations (14)-(19) ensure their proper functioning. Constraints in equations (14) and (15) limit the charging and discharging according to the shareholding, $\Upsilon_{i,n,t}$, of the community member $i$ that participates in the CESS 610 asset $n$. They also prevent simultaneous charging and discharging from the same CESS 610 for each community member 130. The SOC of the CESS $n$ is determined through the constraint in equation (17), accounting for the total charging and discharging of peers $n \in \Omega_i$. Complementary, the state of charge (SOC) of the CESS 610 is constrained by upper and lower bounds, presented in equation (19).

$$S_{i,n,t}^{ch} \leq \Upsilon_{i,n,t} \cdot S_n^{max} \cdot X_{i,n,t} \qquad (14)$$

$$S_{i,n,t}^{dch} \leq SOC_{n,t}^i \cdot S_n^{max} \cdot (1 - X_{i,n,t}) \qquad (15)$$

$$S_{i,n,t}^{ch} + S_{i,n,t}^{dch} = \sum_{j \in C_i} P_{j,t}^{F(k)}, \forall(i,t) \in (\Omega_{CA}, T) \qquad (16)$$

$$SOC_{n,t} = SOC_{n,t-1} \cdot (1 - \lambda^{SD}) + \eta_n^{ch} \cdot \sum_i^{\Omega_i} S_{i,n,t}^{ch} - \frac{S_{i,n,t}^{dch}}{\eta_n^{dch}} \qquad (17)$$

$$SOC_{n,t}^i = SOC_{n,t-1}^i \cdot (1 - \lambda^{SD}) + \eta_n^{ch} \cdot S_{i,n,t}^{ch} - \frac{S_{i,n,t}^{dch}}{\eta_n^{dch}} \qquad (18)$$

$$SOC_{n,t} \leq SOC_{n,t} \leq \overline{SOC_{n,t}} \tag{19}$$

where $S_{i,n,t}^{ch}$ is the power charged to the storage unit $n$ by community member $i$ in time $t$, and $S_{i,n,t}^{dch}$ is the power discharged. $SOC_{n,t}$ is the state of charge of the storage unit $n$ in time t. $\lambda^{SD}$, $\eta_n^{ch}$, and $\eta_n^{dch}$, are the self-discharge rate of the storage units, charging and discharging efficiencies, respectively.

The method disclosed in [1] fully decentralizes a network-constrained community-based energy trading system, but with limitations. The method proposed in [1] has some important issues regarding the convergence rate and computational effort. The results show that the algorithm of [1] is precise in reaching the global optimal solution but with great computational effort and an inefficient convergence rate.

Advantageously, the present invention employs a residual balancing technique at the beginning of the algorithm, which considerably reduces the number of iterations required for the algorithm to converge. In particular, a 68% reduction in the number of iterations and a 64% reduction in computational time was observed, in average, compared to the algorithm of [1]. The ADMM algorithm distributes the data across different local problems and optimizes the subproblem locally, thus requiring multiple data exchanges between the community members 130 and the ADMM coordinator 140 in each iteration. By reducing the number of iterations, the number of community communications are proportionally reduced.

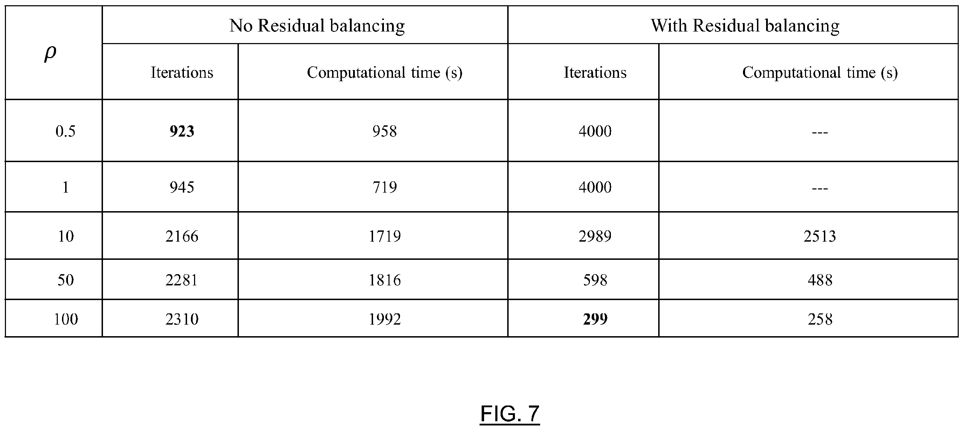

The table in **Figure 7** represents a comparison between the outcomes of the algorithm of the present disclosure (with residual balancing) and the algorithm of [1], which does not incorporate residual balancing. The evaluation is performed for the 10-bus radial network of Figure 2. As it can be observed, the present invention is able to solve the problem in far fewer iterations than [1]: the fewest number of iterations achieved by [1] is 923 (with $\rho = 0.5$), whereas the present invention solves the problem in only 299 iterations (with $\rho = 100$), the penalty parameter $\rho$ being selected in each case to obtain the best result possible. Depending on the grid structure and on the number of P2P trades, the penalty parameter $\rho$ will directly influence the convergence rate behaviour.

The algorithm of [1] was also tested for a larger network comprising 33 buses (the local energy community 120 including consumers -"load bus"-, prosumers -"load bus with photovoltaic system"- and collective assets -bus with CESS- for resource sharing), depicted on **Figure 8,** but it could not find a solution. In contrast, the method of the present invention successfully found a solution in 2079 iterations and took approximately 6700 seconds. These results demonstrate that the present method is not only much more efficient than the algorithm used in [1], but also has greater scalability regarding the size of the network.

In addition, resource sharing or collective assets were not considered in the method disclosed in [1] and therefore not included in the local energy community 120. The present disclosure considers resource sharing through the integration of collective assets in the local energy community 120, wherein the collective assets are modeled in the same way as community members, independently, autonomously, and with privacy guarantees.

In the method of [1], network losses were also not considered. The present disclosure includes a modification in the optimal power flow to consider network losses. This modification is based on determining the current in all lines of the network and determining the losses in energy transactions, both for community members and for exchanges outside the community. The optimal power flow integrates network losses by relaxing and linearizing the branch flow model used to model network constraints.

The EMS 136 of each community member 130 is responsible for managing the net load at the network connection point (i.e., at the bus 124 linked to the community member 130). The community member 130 can be a residential building, a commercial building or even an aggregator that collects a set of consumers at the network connection point. The EMS runs an optimization problem that performs the net balance between consumption and generation of the members that are inside of the network connection point.

Once convergence is reached, the ADMM coordinator 140 stops the ADMM algorithm and each EMS 136 stops receiving updated information for the next ADMM iteration, and therefore considers the solution of the last iteration as the optimal solution. No communication is in fact needed to inform that convergence has been reached.

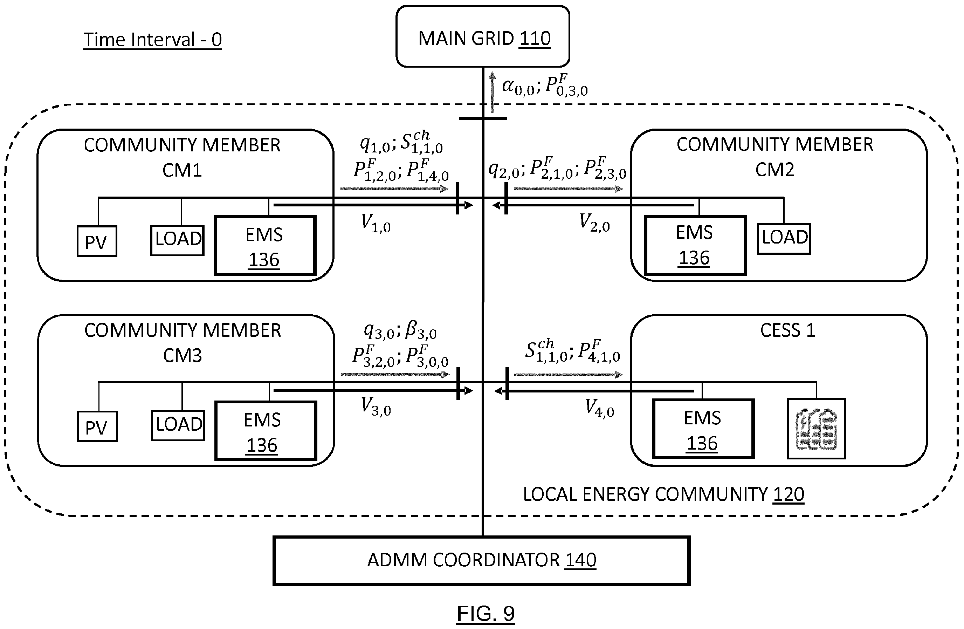

Then, each EMS 136 applies the energy exchanges for the corresponding community member $i$ in the time period $t$. **Figure 9** shows an example of different energy exchanges for the first time period (t=0). In this example, community members 1 and 3 have photovoltaic (PV) power surplus. Community member CM1 trades its PV power surplus with other community members 130 of the local energy community 120; besides, community member CM1 uses some of the exceeding power to charge and store energy in the CESS 1 ( $S_{1,1,0}^{ch}$ ). Community member CM3 not only trades energy with the local energy community 120, but also exports ($\beta_{3,0}$) energy to the main grid. The EMS 136 also sets the tension $V_{i,0}$ of the corresponding bus at this time period.

**Claims**

1. A system for distributed operation of a local energy community, the local energy community (120) including a plurality of community members (130) with a load (132) and/or a photovoltaic system (134) and an electricity network comprising a set of buses (122,124) and a set of power lines (126) connecting the buses, the set of buses including a main bus (122) linked to a main grid (110) and a first subset of buses (124) linked to the community members (130), wherein the electricity network is a radial distribution network in which every bus of the set of buses (122,124) has one or more child buses and, except for the main bus (122), only one parent bus; wherein the system (100) comprises an ADMM coordinator (140) and an energy management system (136) located at each community member (130), the energy management system (136) of each community member (130) being configured to:

   define, for the corresponding community member i (130), an optimization problem (442) including an objective function subject to operational constraints of the electricity network using a branch flow model to minimize energy exchanges with the main grid (110);
   solve, in combination with the ADMM coordinator (140) and the energy management system (136) of the rest of community members (130), the optimization problem (442) in a distributed manner using the alternating direction method of multipliers, ADMM, to obtain a solution including a plurality of energy exchanges (452) between the community members (130) and the main grid (110) for each time period $t$ of a set of time periods $T$; and
   apply the plurality of energy exchanges (452) for the corresponding community member $i$ (130) in each time period $t$;

   **characterized in that** the energy management system (136) of each community member (130) is further configured to:

   define, for the corresponding community member $i$ (130), an initial optimization problem (412) in which the community member $i$ (130) can only engage in energy transactions with the main grid (110);
   solve the initial optimization problem (412) of the corresponding community member $i$ (130), obtaining a first residual balancing variable ($init_{i,t}$) (422) that provides a solution for every time interval $t$;
   obtain, for the corresponding community member $i$ (130), a second residual balancing variable (432) for each child bus linked to a community member $j$, wherein each second residual balancing variable (432) is the branch line capacity ($cap_{i,j}$) representing the maximum current that can flow in the power line (126) connecting the bus linked to community member $i$ with a child bus linked to the community member $j$; and
   modify, prior to solving the optimization problem (442), the objective function for the corresponding community member $i$ (130) with the first (422) and second (432) residual balancing variables.

2. The system of claim 1, wherein the objective function of each community member (130) includes a plurality of energy transaction costs of the energy exchanges associated to the corresponding community member (130); and wherein to modify the objective function the energy management system (136) of each community member (130) is configured to divide the energy transaction costs by the first residual balancing variable (422).

3. The system of any preceding claim, wherein the objective function of each community member (130) includes a plurality of consensus terms; and wherein to modify the objective function the energy management system (136) of each community member (130) is configured to divide the consensus terms by the second residual balancing variable (432).

4. The system of any preceding claim, wherein the objective function includes a plurality of local coupling variables associated to each community member (130); and wherein to solve the optimization problem (442) in a distributed manner:

   the energy management system (136) of each community member (130) is configured to iteratively solve the corresponding optimization problem, obtaining a set of variables including a plurality of energy exchanges for each ADMM iteration; and send a plurality of variables from the set of variables to the ADMM coordinator (140);
   the ADMM coordinator (140) is configured to iteratively check for convergence by comparing the local coupling variables with corresponding global coupling variables and:

      if convergence is not reached, update the local coupling variables using a penalty parameter $\rho$, and send the updated local coupling variables to the corresponding community member (130) for the following iteration;
      if convergence is reached, notify the community members (130) to apply the plurality of energy exchanges obtained in the last ADMM iteration.

5. The system of any preceding claim, wherein the set of buses includes a second subset of buses (128), each bus (128) of the second subset of buses linked to a collective energy storage system (610), and wherein the operational constraints of the electricity network include constraints of the charging and discharging of each collective energy storage system (610).

6. A method for distributed operation of a local energy community, the local energy community (120) including a plurality of community members (130) with a load (132) and/or a photovoltaic system (134) and an electricity network comprising a set of buses (122,124) and a set of power lines (126) connecting the buses, the set of buses including a main bus (122) linked to a main grid (110) and a first subset of buses (124) linked to the community members (130), wherein the electricity network is a radial distribution network in which every bus of the set of buses (122,124) has one or more child buses and, except for the main bus (122), only one parent bus; wherein the method (400) comprises:

> defining (440), for each community member i (130), an optimization problem (442) including an objective function subject to operational constraints of the electricity network using a branch flow model to minimize energy exchanges with the main grid (110);
> solving (450) the optimization problem (442) in a distributed manner using the alternating direction method of multipliers, ADMM, obtaining a solution including a plurality of energy exchanges (452) between the community members (130) and the main grid (110) for each time period $t$ of a set of time periods $T$; and
> applying (460) the plurality of energy exchanges (452) in each community member $i$ (130) for each time period $t$;

> **characterized in that** the method (400) comprises a pre-optimization stage (402) performed prior to solving (420) the optimization problem (442), the pre-optimization stage (402) including:

>> defining (410), for each community member $i$ (130), an initial optimization problem (412) in which the community member $i$ (130) can only engage in energy transactions with the main grid (110);
>> solving (420) the initial optimization problem (412) of each community member i (130), obtaining a first residual balancing variable ($init_{i,t}$) (422) that provides a solution for every time interval $t$; and
>> obtaining (430), for each community member $i$ (130), a second residual balancing variable (432) for each child bus linked to a community member $j$, wherein each second residual balancing variable (432) is the branch line capacity ($cap_{i,j}$) representing the maximum current that can flow in the power line (126) connecting the bus linked to community member $i$ with a child bus linked to the community member $j$; and wherein the objective function of the optimization problem (442) for each community member $i$ (130) is modified with the first (422) and second (432) residual balancing variables.

7. The method of claim 6, wherein the objective function of each community member (130) includes a plurality of energy transaction costs of the energy exchanges associated to the corresponding community member (130); and wherein modifying the objective function includes dividing the energy transaction costs by the first residual balancing variable (422).

8. The method of any of claims 6 to 7, wherein the objective function of each community member (130) includes a plurality of consensus terms; and wherein modifying the objective function includes dividing the consensus terms by the second residual balancing variable (432).

9. The method of any of claims 6 to 8, wherein the objective function includes a plurality of local coupling variables associated to each community member (130); and wherein solving (450) the optimization problem (442) in a distributed manner comprises applying a plurality of ADMM iterations, each ADMM iteration including:

> solving, by each community member, the corresponding optimization problem, obtaining a set of variables including a plurality of energy exchanges;
> sending, by each community member, a plurality of variables from the set of variables to an ADMM coordinator (140);
> checking, by the ADMM coordinator (140), for convergence by comparing the local coupling variables with corresponding global coupling variables and:

>> if convergence is not reached, updating the local coupling variables using a penalty parameter $\rho$, and sending the updated local coupling variables to the corresponding community member (130) for the following iteration;
if convergence is reached, notifying the community members (130) to apply the plurality of energy exchanges obtained in the last ADMM iteration.

10. The method of any of claims 6 to 9, wherein the set of buses includes a second subset of buses (128), each bus (128) of the second subset of buses linked to a collective energy storage system (610), and wherein the operational constraints of the electricity network include constraints of the charging and discharging of each collective energy storage system (610).

11. A computer program product for distributed operation of a local energy community, comprising at least one computer-readable storage medium having recorded thereon computer code instructions that, when executed by a processor, causes the processor to perform the method of any of claims 6 to 10.

EP 4 481 973 A1

FIG. 1

FIG. 2

_FIG. 3_

EP 4 481 973 A1

```
                                                                        ┌─────────────────┐  ┌410
PRE-OPTIMIZATION                    DEFINE, FOR EACH COMMUNITY MEMBER, AN                 ⟹  INITIAL OPTIMIZATION
STAGE 402                           INITIAL OPTIMIZATION PROBLEM TO MINIMIZE                 PROBLEM            ╱412
                                    ENERGY EXCHANGES WITH THE MAIN GRID,
                                    DISREGARDING THE COMMUNITY PRESENCE                                                    400
```

PRE-OPTIMIZATION STAGE 402

DEFINE, FOR EACH COMMUNITY MEMBER, AN INITIAL OPTIMIZATION PROBLEM TO MINIMIZE ENERGY EXCHANGES WITH THE MAIN GRID, DISREGARDING THE COMMUNITY PRESENCE — 410

⟹ INITIAL OPTIMIZATION PROBLEM — 412

400

SOLVE THE INITIAL OPTIMIZATION PROBLEM OF EACH COMMUNITY MEMBER — 420

⟹ FIRST RESIDUAL BALANCING VARIABLE ($init_{i,t}$) — 422

OBTAINING, FOR EACH COMMUNITY MEMBER $i$, THE MAXIMUM CURRENT THAT CAN FLOW IN POWER LINE CONNECTING WITH CHILD BUS $j$, BRANCH LINE CAPACITY ($cap_{i,j}$) — 430

⟹ SECOND RESIDUAL BALANCING VARIABLE ($cap_{i,j}$) — 432

DEFINE, FOR EACH COMMUNITY MEMBER, AN OPTIMIZATION PROBLEM TO MINIMIZE ENERGY EXCHANGES WITH THE MAIN GRID, THE OBJECTIVE FUNCTION BEING MODIFIED WITH THE FIRST AND SECOND RESIDUAL BALANCING VARIABLES — 440

⟹ OPTIMIZATION PROBLEM — 442

SOLVE THE OPTIMIZATION PROBLEM USING ADMM ALGORITHM — 450

⟹ ENERGY EXCHANGES — 452

APPLY THE ENERGY EXCHANGES — 460

FIG. 4

FIG. 5A

FIG. 5B

EP 4 481 973 A1

MAIN GRID 110

LOCAL ENERGY COMMUNITY 120

122    126

COMMUNITY MEMBER 130    124    124    COMMUNITY MEMBER 130

134    132    EMS    EMS    132    LOAD
PV    LOAD    136    136

COMMUNITY MEMBER 130    124    128    CESS 610

132    LOAD    EMS    EMS    612
136    136

ADMM COORDINATOR 140

FIG. 6

EP 4 481 973 A1

| $\rho$ | No Residual balancing | | With Residual balancing | |
|---|---|---|---|---|
| | Iterations | Computational time (s) | Iterations | Computational time (s) |
| 0.5 | **923** | 958 | 4000 | --- |
| 1 | 945 | 719 | 4000 | --- |
| 10 | 2166 | 1719 | 2989 | 2513 |
| 50 | 2281 | 1816 | 598 | 488 |
| 100 | 2310 | 1992 | **299** | 258 |

FIG. 7

EP 4 481 973 A1

FIG. 8

Time Interval - 0

MAIN GRID **110**

$\alpha_{0,0}; P^F_{0,3,0}$

COMMUNITY MEMBER CM1

$q_{1,0}; S^{ch}_{1,1,0}$
$P^F_{1,2,0}; P^F_{1,4,0}$
$V_{1,0}$

PV  LOAD  EMS **136**

COMMUNITY MEMBER CM2

$q_{2,0}; P^F_{2,1,0}; P^F_{2,3,0}$
$V_{2,0}$

EMS **136**  LOAD

COMMUNITY MEMBER CM3

$q_{3,0}; \beta_{3,0}$
$P^F_{3,2,0}; P^F_{3,0,0}$
$V_{3,0}$

PV  LOAD  EMS **136**

CESS 1

$S^{ch}_{1,1,0}; P^F_{4,1,0}$
$V_{4,0}$

EMS **136**

LOCAL ENERGY COMMUNITY **120**

ADMM COORDINATOR **140**

FIG. 9

## EUROPEAN SEARCH REPORT

Application Number

EP 23 18 1146

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | OLIVEIRA CARLOS ET AL: "Full distributed P2P market and distribution network operation based on ADMM: Testing and evaluation", 2023 19TH INTERNATIONAL CONFERENCE ON THE EUROPEAN ENERGY MARKET (EEM), IEEE, 6 June 2023 (2023-06-06), pages 1-6, XP034368059, DOI: 10.1109/EEM58374.2023.10161989 [retrieved on 2023-07-03] * the whole document * | 1-11 | INV. H02J3/00 H02J3/06 H02J3/14 H02J3/38 H02J13/00 |
| X,D | OLIVEIRA CARLOS ET AL: "Distributed Network-Constrained P2P Community-Based Market for Distribution Networks", ENERGIES, vol. 16, no. 3, 1 February 2023 (2023-02-01), page 1520, XP93111694, CH ISSN: 1996-1073, DOI: 10.3390/en16031520 * the whole document * | 1-11 | |
| A | ULLAH MD HABIB ET AL: "Peer-to-Peer Energy Trading in Transactive Markets Considering Physical Network Constraints", IEEE TRANSACTIONS ON SMART GRID, IEEE, USA, vol. 12, no. 4, 4 March 2021 (2021-03-04), pages 3390-3403, XP011861398, ISSN: 1949-3053, DOI: 10.1109/TSG.2021.3063960 [retrieved on 2021-06-18] * the whole document * | 1-11 | TECHNICAL FIELDS SEARCHED (IPC) H02J |
| A | US 2016/259314 A1 (DHOPLE SAIRAJ [US] ET AL) 8 September 2016 (2016-09-08) * the whole document * | 1-11 | |

-/--

The present search report has been drawn up for all claims

| Place of search | Date of completion of the search | Examiner |
|---|---|---|
| Munich | 13 December 2023 | Hunckler, José |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

# EUROPEAN SEARCH REPORT

**Application Number**

EP 23 18 1146

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/215486 A1 (MARTINEZ JORGE ELIZONDO [US] ET AL) 7 July 2022 (2022-07-07) * the whole document * ----- | 1-11 | |
| A | WO 2022/066397 A1 (ENERGYHUB INC [US]) 31 March 2022 (2022-03-31) * the whole document * ----- | 1-11 | |

**TECHNICAL FIELDS SEARCHED (IPC)**

The present search report has been drawn up for all claims

| Place of search | Date of completion of the search | Examiner |
|---|---|---|
| Munich | 13 December 2023 | Hunckler, José |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...................................................................................
& : member of the same patent family, corresponding
document

EPO FORM 1503 03.82 (P04C01)

**ANNEX TO THE EUROPEAN SEARCH REPORT**
**ON EUROPEAN PATENT APPLICATION NO.**                    **EP 23 18 1146**

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2023

| Patent document cited in search report | Publication date | Patent family member(s) | | Publication date |
|---|---|---|---|---|
| US 2016259314 A1 | 08-09-2016 | NONE | | |
| US 2022215486 A1 | 07-07-2022 | CA | 3203834 A1 | 07-07-2022 |
| | | CN | 117063132 A | 14-11-2023 |
| | | EP | 4272035 A1 | 08-11-2023 |
| | | US | 2022215486 A1 | 07-07-2022 |
| | | WO | 2022147319 A1 | 07-07-2022 |
| WO 2022066397 A1 | 31-03-2022 | CA | 3195349 A1 | 31-03-2022 |
| | | WO | 2022066397 A1 | 31-03-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **OLIVEIRA, C et al.** Distributed Network-Constrained P2P Community-Based Market for Distribution Networks. *Energies*, 2023, vol. 16 (3)